# EUROPÄISCHE PATENTANMELDUNG

(11) **EP 4 484 939 A1**
(43) Veröffentlichungstag der Anmeldung: **01.01.2025**
(21) Anmeldenummer: 23182667.8
(22) Anmeldetag: 30.06.2023
(51) Int. Cl.: G01N 25/72, H01M 10/058

(54) **LÖSUNGSMITTEL-SENSOR, VERWENDUNG DES LÖSUNGSMITTEL-SENSORS, TROCKNUNGS-VORRICHTUNG MIT DEM LÖSUNGSMITTEL-SENSOR UND COMPUTERPROGRAMM-PRODUKT MIT DIGITALEM ZWILLING ZUR SIMULATION DES LÖSUNGSMITTEL-SENSORS, DER VERWENDUNG DES LÖSUNGSMITTEL-SENSORS UND/ODER DER TROCKNUNGS-VORRICHTUNG**

(71) Anmelder: Siemens Aktiengesellschaft, 80333 München (DE)
(72) Erfinder: Schulte, Sascha, 91315 Höchstadt (DE); Albrecht, Andreas, 89081 Ulm (DE); Pohle, Roland, 85570 Herdweg (DE); Witt, Jonas, 90419 Nürnberg (DE); Mack, Christian, 91056 Erlangen-Dechsendorf (DE)
(74) Vertreter: Siemens Patent Attorneys

(57) **Zusammenfassung**

Die Erfindung betrifft einen Lösungsmittel-Sensor zum Bestimmen eines absoluten Gehalts eines Lösungsmittels (31) in zumindest einem Schicht-Segment (32) einer Schicht (3), die auf einer Oberfläche eines Objekts (2) aufgetragen ist. Der Lösungsmittel-Sensor weist mindestens eine Wärmebild-Kamera zum Festlegen des Schicht-Segments und mindestens eine multispektralen Infrarot-Kamera zum Ermitteln des absoluten Gehalts des Lösungsmittels im festgelegten Schicht-Segment der Schicht auf. Die Erfindung wird im Rahmen der Herstellung von Batteriezellen eingesetzt.

## Beschreibung

Die Erfindung betrifft einen Lösungsmittel-Sensor, eine Verwendung des Lösungsmittel-Sensors und eine Trocknungs-Vorrichtung mit dem Lösungsmittel-Sensor. Daneben wird ein Computerprogramm-Produkt mit einem digitalen Zwilling zur Simulation des Lösungsmittel-Sensors, der Verwendung des Lösungsmittel-Sensors und/oder der Trocknungs-Vorrichtung angegeben.

Bei der Produktion von Batteriezellen und vergleichbar aufgebauten Flächenelementen werden Elektroden zunächst auf langen Bahnen metallischer Folien aufgetragen und erst später zu den Batteriezellen verarbeitet.

Die Beschichtung erfolgt in den meisten Fällen durch das Auftragen einer nassen Paste auf einer Folien-Oberfläche (Objekt-Oberfläche) der Metall-Folie (Objekt). Die Paste besteht z.B. aus einer Mischung mit Graphit, Bindemitteln, Lösungsmitteln und ggf. weiteren Bestandteilen.

Zur weiteren Verarbeitung ist eine unmittelbar nach dem Beschichten erfolgende Trocknung (Entfernen von Lösungsmittel) notwendig. Bei dieser Trocknung ist ein typ- und prozessspezifischer, maximaler Restfeuchtewert nicht zu überschreiten, da sonst die im weiteren Verlauf zusammengebaute Batteriezelle nicht ordnungsgemäß funktionieren kann.

Problematisch ist der Einfluss verschiedenster Effekte auf das Trocknungsverhalten der aufgetragenen Paste, so dass oft der gewünschte Trocknungsgrad nicht erreicht wird. In anderen Fällen wird die aufgetragene Paste bewusst stark übertrocknet, um eine maximale Restfeuchte an Lösungsmittel sicher einzuhalten. Dies ist mit einem erheblichen Energieaufwand verbunden. Besonders ausgeprägt ist dieses Problem bei lokal eng begrenzten Ausreißern. Wenn beispielsweise bekannt ist, dass Bereiche von wenigen Quadratzentimetern sporadisch zu hohe Feuchtigkeitswerte aufweisen, wird die gesamte Bahn mit der Paste so stark übertrocknet, dass auch solche Ausreißer sicher getrocknet werden können. Damit wird für das Trocknen mehr Energie aufgewendet, als eigentlich notwendig wäre.

Aufgabe der Erfindung ist es, aufzuzeigen, wie eine lösungsmittelhaltige Schicht auf einer Objekt-Oberfläche eines Objekts effizient mit hohem Trocknungsgrad und mit möglichst geringem Energieaufwand getrocknet werden kann.

Zur Lösung der Aufgabe wird ein Lösungsmittel-Sensor zum Bestimmen eines absoluten Gehalts eines Lösungsmittels in zumindest einem Schicht-Segment einer Schicht angegeben, die auf einer Objekt-Oberfläche eines Objekts aufgetragen ist. Der Lösungsmittel-Sensor weist mindestens eine Wärmebild-Kamera zum Festlegen des Schicht-Segments und mindestens eine multispektrale Infrarot-Kamera (HSI-Kamera, hyper sectral imaging IR camera) zum Ermitteln des absoluten Gehalts des Lösungsmittels im festgelegten Schicht-Segment der Schicht auf.

Zur Lösung der Aufgabe wird auch eine Verwendung des Lösungsmittel-Sensors zum Herstellen eines beschichteten Objekts mit folgenden Verfahrensschritten angegeben:
a) Bereitstellen einer Anordnung mit einer auf einer Objekt-Oberfläche eines Objekts aufgetragenen lösungsmittelhaltigen Schicht mit Lösungsmittel und
b) Entfernen des Lösungsmittels der Schicht,
   wobei vor, während und/oder nach dem Entfernen des Lösungsmittels mit Hilfe des Lösungsmittel-Sensors die Schicht in Schicht-Segmente eingeteilt und ein absoluter Gehalt des Lösungsmittels in zumindest einem der Schicht-Segmente der Schicht bestimmt werden.

Zur Lösung der Aufgabe wird zudem eine Trocknungs-Vorrichtung zum Entfernen von Lösungsmittel mindestens eines Schicht-Segments einer Schicht angegeben, die auf einer Objekt-Oberfläche eines Objekts aufgetragen ist. Folgende Merkmale der Trocknungs-Vorrichtung sind dabei umfasst:
- Mindestens ein Lösungsmittel-Sensor und
- mindestens eine Wärmequelle zum Entfernen des Lösungsmittels des Schicht-Segments der Schicht.

Gemäß einem weiteren Aspekt der Erfindung wird ein Computer-Programm-Produkt mit einem digitalen Zwilling zur Simulation des Lösungsmittel-Sensors, der Verwendung des Lösungsmittel-Sensors und/oder der Trocknungs-Vorrichtung angegeben.

Mit der grundlegenden Idee der Erfindung besteht die Möglichkeit, den Lösungsmittel-Gehalt in der Schicht möglichst schnell und punktgenau zu bestimmen. Mit der multispektralen Kamera allein würde das nicht funktionieren, sie ist zu träge: In der industriellen Fertigung liegt hier eine Mess-Auflösung beispielsweise bei lediglich 15 cm. Dies wäre zu ungenau. Mit der Erfindung findet zunächst eine schnelle Segmentierung der Schicht mit Hilfe der Wärmebild-Kamera (Thermographie-Kamera, "normale" IR-Kamera) statt. Beim Verdampfen eines "letzten" Lösungsmittel-Tröpfchens der Schicht ändert sich die Temperatur der Schicht. Diese Änderung wird von der Wärmebild-Kamera erfasst. Mit der Wärmebild-Kamera ist im Gegensatz zur multispektralen Infrarot-Kamera eine Auflösung im Millimeter-Bereich möglich. Von der "schnellen" Wärmebild-Kamera könnte aber der absolute Lösungsmittel-Gehalt nicht bestimmt werden. Mit der Wärmebild-Kamera werden aber Schicht-Segmente (Regionen der Schicht) mit gleichbleibendem Lösungsmittel-Gehalt ermittelt. Zu diesen Schicht-Segmenten wird jeweils der absolute Lösungsmittel-Gehalt mit der "langsamen" multispektralen Infrarot-Kamera ermittelt. Bei Kenntnis des so bestimmten, genauen absoluten Lösungsmittel-Gehalts kann dann in einem nachfolgenden Trocknungs-Schritt eine für das Entfernen des Lösungsmittels benötigte Wärmemenge in das Schicht-Segment der Sicht gezielt eingebracht werden.

Die Erfindung ist für das Entfernen beliebiger organischer und/oder anorganischer Lösungs-Mittel bzw. Mischungen davon aus einer mehr oder weniger feuchten Schicht geeignet. Vorzugsweise ist der Lösungsmittel-Sensor ein Lösungsmittel-Sensor für ein Lösungsmittel mit (flüssigem) Wasser. Als Lösungsmittel wird Wasser oder eine Mischung mit Wasser verwendet.

In einer besonderen Ausgestaltung wird als Objekt mit Objekt-Oberfläche eine Folie mit Folien-Oberfläche verwendet. Die Folien-Oberfläche ist die Objekt-Oberfläche. Vorzugsweise wird als Folie eine Metall-Folie verwendet. Insbesondere wird als Metall-Folie eine Metall-Folie für die Herstellung eines Strom-Sammlers einer Batterie bzw. einer Batteriezelle verwendet.

Um das Entfernen des Lösungsmittels zu unterstützen, ist es vorteilhaft, eine nicht zu dicke Schicht zu verwenden. Gemäß einer besonderen Ausgestaltung wird daher eine Schicht mit einer aus dem Bereich von 50 pm bis 1000 pm und insbesondere aus dem Bereich 100 µm 500 pm ausgewählten Schicht-Dicke verwendet.

Im Hinblick auf die Trocknungs-Vorrichtung weist die Wärmequelle eine Quelle für elektromagnetische Strahlung auf. Zum Trocknen der Schicht findet ein Wärmeeintrag über elektromagnetische Strahlung statt. Vorzugweise wird dazu Infrarot-Strahlung verwendet. Die Infrarot-Strahlung kann direkt für den Wärmeeintrag verwendet werden. Eine Umwandlung von kurzwelliger (hochenergetischer) elektromagnetischer Strahlung in langwellige (niederenergetische) elektromagnetische Strahlung erübrigt sich.

In einer besonderen Ausgestaltung weist die Quelle für elektromagnetische Strahlung zumindest einen Laser auf. Mit dem Laser ist es möglich, punktgenau Wärmemenge in die Schicht bzw. in das Schicht-Segment der Schicht einzutragen und damit punktgenau die Schicht bzw. das Schicht-Segment zu trocknen.

Folgende Aspekte der Erfindung sind besonders zu berücksichtigen:
- In der Kombination der HSI mit einer Thermografie können absolute Lösungsmittelgehalte (Restfeuchtewerte) sicher ermittelt werden. Die HSI ermittelt nach der Trocknung die Restfeuchte mit absoluter Genauigkeit, jedoch mit einer Auflösung von nur 10-15 cm in Vorschubrichtung eines Bandes mit für eine industrielle Herstellung eines Metall-Folie (Objekt) mit aufgebrachter Metall-Schicht.
- Die Thermografiekamera (TK) ermittelt mm-genau Unterschiede im Feuchtigkeitswert der Beschichtung, kann diese aber nicht quantifizieren. Wenn die TK Flächen mit gleichbleibender Feuchte identifiziert, kann dieser Wert mit dem Messwert der HSI als "ground truth" kalibriert werden. So kann der Messung der TK ein absoluter Wert des Lösungsmittel-Gehalts zugeordnet werden. Wenn mehrere derartig kalibrierte Messungen vorliegen, ergibt sich eine Zuordnungsmatrix, in der verschiedene Messwerte der TK den jeweiligen absoluten Daten (Lösungsmittel-Gehalte) der HSI zugeordnet werden können. In der Folge können dann auch Einzelpunktmessungen im Bereich einiger mm mit einem absoluten Feuchtigkeitswert quantifiziert werden, ohne dass die HSI diesen Punkt erfassen kann.

Die Identifikation derartiger lokal stark eingegrenzter Feuchtigkeitswerte hat mehrere Vorteile:
- Im einfachsten Fall kann eine Bahn aus Folie mit aufgetragener Beschichtung mit einem im Durchschnitt ausreichenden Energieeintrag getrocknet werden. Dabei wird akzeptiert, dass ungewöhnlich feuchte Bereiche nicht ausreichend getrocknet werden. Statt wie üblich die gesamte Bahn mit der Schicht zu übertrocknen, wird der unzureichend getrocknete Bereich als "Fehlstelle" markiert und später ausgeschleust.
- Bei Vorliegen einer mehrstufigen, punktgenau arbeitenden Trocknungsanlage (z.B. Lasertrocknung), kann der so identifizierte Punkt explizit und mit exakt dosierter Energie (auf Basis der absolut quantifizierten Feuchtebestimmung) nachgetrocknet werden. In der weiteren Folge kann dies auch genutzt werden, um in einer mehrstufigen Trocknung das Band zunächst um z.B. 80% oder 90% vorzutrocknen, danach punktgenau die Restfeuchte zu bestimmen und in der zweiten (oder weiteren) Stufe jeden mm² der Oberfläche individuell zu trocknen. Dies spart große Mengen Energie und schont die Beschichtung, da bereits getrocknete Bereiche nicht mehr übertrocknet und damit belastet werden.
- Bei normaler, vollständiger Trocknung der Bahn, ggf. mit nur geringer Übertrocknung, kann für jeden Punkt mit zu hoher Restfeuchte individuell ermittelt werden, ob seine Restfeuchte dennoch akzeptiert werden kann. Beispielsweise kann aus der Dichte zu benachbarten Punkten mit zu hoher Feuchte berechnet werden, ob diese Punkte durch Diffusion in umliegende Bereiche ihre Feucht auf ein akzeptables Niveau bringen können, als Heilungsmaßnahme also lediglich eine mehrstündige Lagerung (die meist ohnehin beim Transport erfolgt) ausreicht.
- Bei Erkennen einer allgemeinen Drift oder phasenweiser Feuchtigkeitsabweichungen kann mit einer rückgekoppelten Regelschleife auch eine erste Trocknungsstufe in ihrer Leistung angepasst werden.

Zusammenfassend sind mit der Erfindung also folgende Vorteile verbunden:
- Durch die Kombination der Wärmebild-Kamera mit der multispektralen Infrarot-Kamera gelingt es, die Lösungsmittel-Gehalte der auf einem Objekt aufgebrachten Schicht schnell zu erfassen. Somit ist eine Anwendung in der industriellen Fertigung möglich.
- Eine hohe örtliche und zeitlich Auflösung des Lösungsmittel-Gehalts der Schicht ist möglich, so dass nur so viel Energie zum Trocknen in die Schicht eingebracht werden muss, wie sie tatsächlich benötigt wird. Somit kann Energie eingespart werden.
- Zudem wird eine Übertrocknung der Schicht vermieden.

Anhand eines Ausführungsbeispiels und der dazugehörigen Figuren wird die Erfindung näher beschrieben. Die Figuren sind schematisch und stellen keine maßstabsgetreue Abbildung dar.

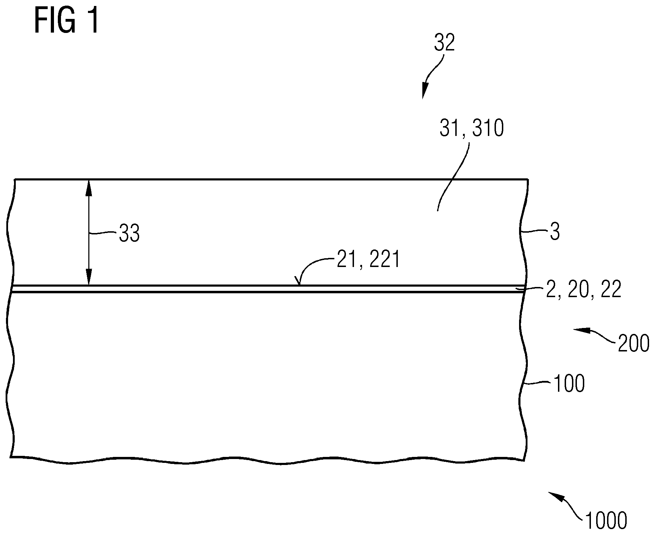

Figur 1 zeigt einen Ausschnitt eines beschichteten Objekts.
Figur 2 zeigt einen Ausschnitt der Trocknungs-Vorrichtung mit Lösungsmittel-Sensor.
Figur 3 zeigt eine Verwendung des Lösungsmittel-Sensors.

Gegeben ist ein Lösungsmittel-Sensor 1 zum Bestimmen eines absoluten Gehalts eines Lösungsmittels 31 in mindestens einem Schicht-Segment 32 einer Schicht 3, die auf einer Objekt-Oberfläche 21 eines Objekts 2 aufgetragen ist. Der Lösungsmittel-Sensor 1 weist
- mindestens eine Wärmebild-Kamera 11 zum Festlegen des Schicht-Segments 32 und
- mindestens eine multispektralen Infrarot-Kamera 12 zum Bestimmen des absoluten Gehalts des Lösungsmittels 31 im Schicht-Segment 32 der Schicht 3 auf.

Der Lösungsmittel-Sensor 1 ist ein Lösungsmittel-Sensor 10 für ein Lösungsmittel mit Wasser 310.

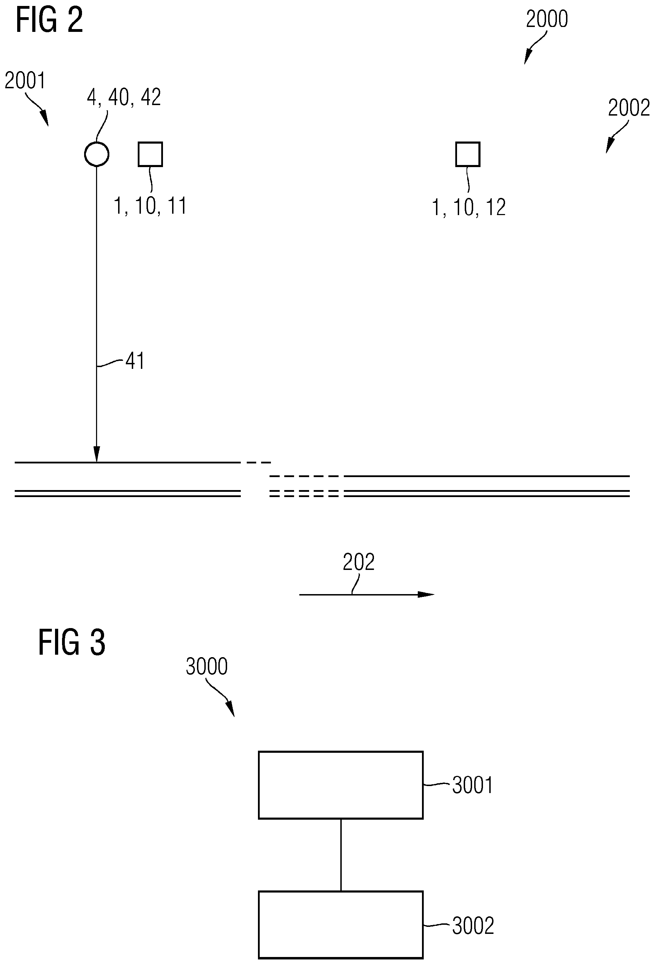

Der Lösungsmittel-Sensor 1 wird zum Herstellen eines beschichteten Objekts 20 mit folgenden Verfahrensschritten verwendet (Figur 3, 3000):
a) Bereitstellen 3001 einer Anordnung 200 mit einer auf einer Objekt-Oberfläche 21 eines Objekts 2 aufgetragenen, lösungsmittelhaltigen Schicht 3 mit Lösungsmittel 31 und
b) Entfernen 3002 des Lösungsmittels 31 der Schicht 3,
   wobei vor, während und/oder nach dem Entfernen des Lösungsmittels 31 mit Hilfe des Lösungsmittel-Sensors 1 die Schicht 3 in Schicht-Segmente 32 eingeteilt und ein absoluter Gehalt des Lösungsmittels 31 in zumindest einem der Schicht-Segmente 32 der Schicht 3 bestimmt werden.

Das zu beschichtende Objekt 2 ist eine Folie 21. Die Folie 21 ist eine Metall-Folie 22 eines Strom-Sammlers 100 einer Batterie 1000. Die Schicht 2 wird von einer auf die Folien-Oberfläche 221 der Metall-Folie 22 aufgebrachte Schicht 3 mit aus einer nassen Paste gebildet. Die Schicht-Dicke 33 der aufgebrachten Schicht 3 beträgt ca. 500 µm.

Die Trocknungs-Vorrichtung 2000 weist einen Lösungsmittel-Sensor 1 und eine Wärmequelle 4 zum Entfernen des Lösungsmittels 31 des Schicht-Segments 32 der Schicht 3 auf. Die Wärmequelle 4 ist eine Quelle 40 für elektromagnetische Strahlung 41. Die Quelle 40 für elektromagnetische Strahlung 41 weist einen Laser 42 auf.

Die zu trocknende Metall-Folie 22 wird in Vorschub-Richtung 201 durch eine erste Station 2001 der Trocknungs-Vorrichtung 2000 und durch eine weitere Station 2002 der Trocknungs-Vorrichtung 2000 transportiert. Mit der ersten Station 2001 wird die Schicht 3 vorgetrocknet. Während des Vortrocknens wird die Schicht 3 segmentiert. So werden Schicht-Segmente 32 mit jeweils gleichbleibendem Lösungsmittel-Gehalt mit Hilfe der Wärmebild-Kamera 11 identifiziert. In der darauffolgenden weiteren Station 2002, also nach dem Vortrocknen in Station 2001, werden mit Hilfe der multispektralen Infrarot-Kamera 12 die absoluten Lösungsmittel-Gehalte der Schicht-Segmente 32 bestimmt. Die Schicht-Segmente 32, deren absolute Lösungsmittel-Gehalte einen vorbestimmten Grenzwert überschreiten, werden dann entweder nachgetrocknet oder aussortiert.

Zur Auslegung der Trocknungs-Vorrichtung 2000 wird ein digitaler Zwilling zur Simulation der Trocknungs-Vorrichtung 2000 verwendet.

## Patentansprüche

1. Lösungsmittel-Sensor (1) zum Bestimmen eines absoluten Gehalts eines Lösungsmittels (31) in mindestens einem Schicht-Segment (32) einer Schicht (3), die auf einer Objekt-Oberfläche (21) eines Objekts (2) aufgetragen ist, mit
- mindestens einer Wärmebild-Kamera (11) zum Festlegen des Schicht-Segments (32) und
- mindestens einer multispektralen Infrarot-Kamera (12) zum Bestimmen des absoluten Gehalts des Lösungsmittels (31) im Schicht-Segment (32) der Schicht (3).

2. Lösungsmittel-Sensor nach Anspruch 1, wobei der Lösungsmittel-Sensor (1) ein Lösungsmittel-Sensor (10) für ein Lösungsmittel mit Wasser ist.

3. Verwendung (3000) eines Lösungsmittel-Sensors (1) nach Anspruch 1 oder 2 zum Herstellen eines beschichteten Objekts (20) mit folgenden Verfahrensschritten:
a) Bereitstellen (3001) einer Anordnung (200) mit einer auf einer Objekt-Oberfläche (21) eines Objekts (2) aufgetragenen lösungsmittelhaltigen Schicht (3) mit Lösungsmittel (31) und
b) Entfernen (3002) des Lösungsmittels (31) der Schicht (3), wobei vor, während und/oder nach dem Entfernen des Lösungsmittels (31) mit Hilfe des Lösungsmittel-Sensors (1) die Schicht (3) in Schicht-Segmente (32) eingeteilt und ein absoluter Gehalt des Lösungsmittels (31) in zumindest einem der Schicht-Segmente (32) der Schicht (3) bestimmt werden.

4. Verwendung nach Anspruch 3, wobei eine Schicht (3) mit einem aus dem Bereich von 50 pm bis 1000 pm und insbesondere aus dem Bereich 100 µm 500 pm ausgewählten Schicht-Dicke (33) verwendet wird.

5. Verwendung nach Anspruch 4, wobei als Lösungsmittel (31) ein Lösungsmittel mit Wasser (310) verwendet wird.

6. Verwendung nach einem der Ansprüche 3 bis 5, wobei als Objekt (2) mit Objekt-Oberfläche (20) eine Folie (22) mit Folien-Oberfläche (221) verwendet wird.

7. Verwendung nach Anspruch 6, wobei als Folie (21) eine Metall-Folie verwendet wird

8. Verwendung nach Anspruch 7, wobei als Metall-Folie eine Metall-Folie für die Herstellung eines Strom-Sammlers (100) einer Batterie (1000) verwendet wird.

9. Trocknungs-Vorrichtung (2000) zum Entfernen von Lösungsmittel (31) mindestens eines Schicht-Segments (32) einer Schicht (3), die auf einer Objekt-Oberfläche (20) eines Objekts (2) aufgetragen ist, mit
- mindestens einem Lösungsmittel-Sensor (1) nach Anspruch 1 oder 2 und
- mindestens einer Wärmequelle (4) zum Entfernen des Lösungsmittels (31) des Schicht-Segments (32) der Schicht (3).

10. Trocknungs-Vorrichtung nach Anspruch 9, wobei die Wärmequelle (4) eine Quelle (40) für elektromagnetische Strahlung (41) aufweist.

11. Trocknungs-Vorrichtung nach Anspruch 10, wobei die Quelle (40) für elektromagnetische Strahlung zumindest einen Laser (42) aufweist.

12. Computer-Programm-Produkt mit einem digitalen Zwilling zur Simulation des Lösungsmittel-Sensors nach Anspruch 1 oder 2, einer Verwendung nach einem der Ansprüche 3 bis 8 und/oder einer Trocknungs-Vorrichtung nach einem der Ansprüche 9 bis 11.
